(19) Europäisches Patentamt
European Patent Office
Office européen des brevets

(11) EP 0 946 420 B1

(12) **EUROPEAN PATENT SPECIFICATION**

(45) Date of publication and mention of the grant of the patent:
**19.02.2003 Bulletin 2003/08**

(21) Application number: **97942148.4**

(22) Date of filing: **09.10.1997**

(51) Int Cl.[7]: **C01G 25/00**, C01G 25/02, B01J 23/10, C01B 13/14

(86) International application number:
**PCT/IB97/01253**

(87) International publication number:
**WO 98/016472 (23.04.1998 Gazette 1998/16)**

(54) **CERIUM AND ZIRCONIUM OXIDES, MIXED OXIDES AND SOLID SOLUTIONS HAVING IMPROVED THERMAL STABILITY FOR CATALYSIS OF EXHAUST GAS SYSTEMS AND METHODS OF PRODUCING**

CERIUM UND ZIRKONIUM OXIDE, MISCHOXIDE UND FESTE LÖSUNGEN MIT VERBESSERTE THERMISCHE STABILITÄT FUR KATALYSE VON ABGASSYSTEME UND VERFAHREN ZUR HERSTELLUNG

OXIDES DE CERIUM ET DE ZIRCONIUM, OXIDES MELANGES ET SOLUTIONS SOLIDES PRESENTANT UNE STABILITE THERMIQUE AMELIOREE DESTINES A DES CATALYSEURS DE SYSTEMES DE GAZ D'ECHAPPEMENT ET LEURS PROCEDES DE PRODUCTION

(84) Designated Contracting States:
**AT BE DE ES FI FR GB IT SE**

(30) Priority: **15.10.1996 US 729933**
**15.10.1996 US 730136**
**15.10.1996 US 730554**

(43) Date of publication of application:
**06.10.1999 Bulletin 1999/40**

(73) Proprietor: **Rhodia Rare Earths, Inc.**
**Shelton, Connecticut 06484 (US)**

(72) Inventor: **CUIF, Jean, Pierre**
**17000 La Rochelle (FR)**

(74) Representative: **Dubruc, Philippe et al**
**Rhodia Services,**
**Direction de la Propriété Industrielle,**
**40, rue de la Haie-Coq**
**93306 Aubervilliers Cedex (FR)**

(56) References cited:
**EP-A- 0 234 647**
**EP-A- 0 319 365**
**EP-A- 0 391 448**
**EP-A- 0 605 274**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

EP 0 946 420 B1

## Description

### Field of the Invention

The present invention relates particularly to the production of mixed oxides, and more particularly relates to the production of cerium and zirconium mixed oxides having improved thermal stability. The mixed oxides have fine particle size distribution, very high surface area, oxygen storage and release capacity, and are useful in many applications including catalytic converters.

### Background Information

Mixed oxides of cerium and zirconium are used for many applications, including catalysts used in automotive catalytic converters and the like. Such cerium and zirconium mixed oxides are typically formed by known precipitation techniques which involve the formation of the solid oxides in a liquid medium. When such mixed oxides are to be used, for example, in catalytic converters, it is desirable to maximize the thermal stability of the compounds, as defined by the stability of the surface area of the material after aging at high temperature. It is also desirable to maximize the surface area of such mixed oxides in order to provide improved catalytic properties. In addition to mixed oxides the present invention also relates to cerium oxides, zirconium oxides, and cerium/zirconia solid solutions (where substitution between cerium and zirconium in the network of the oxide as opposed to being two different phases is one phase).

Most industrial processes which include the precipitation or the creation of a solid in a liquid medium involve a solid/liquid separation state. Filtration, decantation or centrifugation are among the known techniques used for this purpose. After the solid/liquid separation is completed, the so-called wet cake comprises precipitated particles and remaining mother liquor. In most of the processes, the mother liquor contains some salts that can contaminate the oxides generated during the next calcination operation. To reduce the amount of contaminants, washing is needed after the solid/liquid separation. In cases where the salts used as raw materials to make the precipitation are soluble in water, washing is typically carried out with water. The volume and temperature of water used for washing determine the purity of the material and its thermal stability as well.

Although such techniques have been used to produce cerium and zirconium mixed oxides, a need still exists for the production of such mixed oxides and solid solutions having substantially improved thermal stability. EP-A-605274 describes a mixed oxide of cerium and zirconium but the specific surface area of the composition based on cerium and zirconium only, after calcination at 900°C is about 30m$^2$/g. It is an object of the present invention to provide mixed oxides of improved thermal stability as well as cerium and zirconium oxides, preferably cerium oxides of improved thermal stability in addition to solid solutions having improved thermal stability.

### SUMMARY OF THE INVENTION

One aspect of the invention is to provide a novel way to improve the thermal stability of cerium and zirconium oxides, $(Ce,Zr)O_2$ mixed oxides, solid solutions, and mixtures of cerium oxides and zirconium oxides, obtained by processes such as co-precipitation or thermohydrolysis, by introducing alkoxylated compounds by impregnating or in the washing solution of a filter cake during the solid/liquid separation. The cake resulting from the precipitation typically occurs in aqueous media. By washing or impregnating with an alkoxylated compound, thermal stability can be substantially improved. Impregnating involves not draining the cake and instead making a paste which is contacted with the alkoxylated compound.

An object of the present invention is to provide a method for producing cerium and zirconium oxides and mixed oxides, solid solutions and mixtures of oxides having improved thermal stability. The method is preferred for use in producing cerium oxides, cerium and zirconium mixed oxides and cerium and zirconium solid solutions having improved thermal stability. The method includes the steps of forming a mixture comprising a cerium and zirconium mixed oxide ($(Ce, Zr)O_2$) or a $(Ce,Zr)O_2$ solid solution or a cerium oxide ($CeO_2$) or zirconium oxide ($ZrO_2$), washing or impregnating with an alkoxylated compound, and drying or calcining the washed product. In a preferred embodiment, the product can be washed with water prior to washing with the alkoxylated compound. The alkoxylated compound is preferably provided in the form of an aqueous solution.

Another object of the present invention is to provide cerium and zirconium oxides, mixed oxides, mixtures of oxides and solid solutions having improved thermal stability. The oxides, mixed oxides and solid solutions have very high surface areas, very high oxygen storage capacities and low particle size.

These and other objects of the present invention will be more readily apparent from the following description.

All ratios, proportions and percentages herein are by weight, unless otherwise specified. "Comprising," as used herein, means various components can be conjointly employed. Accordingly, the terms "consisting essentially of" and "consisting of" are embodied in the term "comprising."

## DETAILED DESCRIPTION OF THE PREFERRED EMBODIMENTS

The thermal stability of inorganic compounds can be defined as the stability of the surface area when material is aged at high temperature. For many applications, particularly catalysis, high surface area and highly stable materials are required by end users. In accordance with the present invention, cerium and zirconium mixed oxides and solid solutions are produced having improved thermal stability. The invention is also useful for producing cerium oxides, zirconium oxides and mixtures of cerium oxides and zirconium oxides having improved thermal stability.

The present invention relates to the use of alkoxylated compounds having greater than 2 carbon atoms during the washing or impregnating stage in order to improve the thermal stability of $(Ce,Zr)O_2$ mixed oxides and solid solutions. The alkoxylated compounds suitable for use herein have greater than 2 carbon atoms. The mixed oxides and solid solutions can be prepared by various conventional processes. Salts of Ce(III) and Zr(IV), nitrates for instance, can be mixed together and precipitated out by adding a base such as sodium hydroxide or ammonia. Adequate precipitation conditions must be used to obtain the mixed oxide phase after calcination at high temperature. Another process can involve the use of Ce(IV) as a starting material together with a Zr salt. This process also requires the use of a base as a precipitating agent. In any case, the precipitate has to be separated from the mother liquor. In the scope of the present invention, the solid is separated from the liquid by filtration or any other suitable method. In a preferred embodiment, the solid, otherwise called wet cake, is washed during a first stage with water to remove the water-soluble salts, nitrates for instance if nitrate solutions are the raw materials for the reaction. In a second stage of the preferred embodiment, the wet cake is washed or impregnated with a solution containing alkoxylated compounds such as ethoxylated alcohols, organic compounds or ethoxylated polymers such as PEG. Once washed or impregnated, the wet cake is either dried and calcined or directly calcined. The final product is a pure mixed oxide having substantially no organics since they are burned during calcination.

The $(Ce,Zr)O_2$ mixed oxides are initially formed by conventional processes such as co-thermohydrolysis or co-precipitation. Each of these processes is generally described separately below.

### Co-thermohydrolysis

The first stage of the co-thermohydrolysis process involves preparing a mixture, in aqueous medium, of at least a soluble cerium compound and at least a soluble zirconium compound. The mixture can be obtained either from solid compounds which are dissolved in water, or directly from aqueous solutions of these compounds, followed by mixing, in any order, of the defined solutions.

Of the water soluble cerium compounds, one example is Ce IV salts, such as nitrates including ceric ammonium nitrate, that are suitable for the present invention. Preferably, a cerium nitrate is used. The cerium IV salt solution can contain some cerium III. However, it is preferred that the salt contains at least about 85 % cerium IV. An aqueous solution of cerium nitrate can be obtained by reacting nitric acid with a hydrated ceric oxide, prepared by a standard reaction of cerium III salt solution, carbonate for instance, with an ammonia solution in the presence of hydrogen peroxide, an oxidizing agent.

The aqueous solution of cerium IV salt can have some free acid, for instance a normality ranging from 0.1 to 4 N. In the present invention, it is possible to use either a solution containing some free acid or a pre-neutralized solution by addition of a base, such as an aqueous solution of ammonia or alkaline hydroxides, e.g., sodium, potassium, etc. Preferably an ammonia solution is used to reduce the free acidity. In this case, it is possible to define the neutralization rate (r) of the initial solution by the following equation:

$$r=(n_3-n_2)/n_1$$

wherein $n_1$ represents the total number of moles of Ce IV present in the solution after neutralization, $n_2$ represents the number of $OH^-$ ions effectively used to neutralize the initial free acidity from the Ce IV aqueous solution, and $n_3$ represents the total number of moles of $OH^-$ ions from the base added. When a neutralization step is used, excess base can be used in order to ensure the complete precipitation of the $Ce(OH)_4$ species. Preferably, r is lower than 1, more preferably about 0.5.

The soluble zirconium salts used in the invention can be, for instance, zirconium sulfate, zirconyl nitrate or zirconyl chloride.

The amount of cerium and zirconium contained in the mixture substantially corresponds to the stoichiometric proportion required to obtain the final desired composition.

Once the mixture is obtained, it is then heated. The thermal treatment, called thermohydrolysis, is carried out at a preferred temperature of between about 80°C and the critical temperature of the reacting medium, typically between about 80 and about 350°C, more preferably between about 90 and about 200°C.

The heating stage can be carried out under air or under an inert gas such as nitrogen. Any suitable reaction time can be used, usually between about 2 and about 24 hours. The thermal treatment can be performed under atmospheric pressure or under any higher pressure such as the saturated vapor pressure. When the temperature is higher than the reflux temperature of the reaction medium (usually higher than about 100°C), for instance between about 150 and about 350°C, the reaction is performed in a closed reactor or autoclave. The pressure can be equal to the autogenic pressure and can be correlated to the chosen temperature. It is also possible to increase the pressure in the reactor.

After the heating stage, a solid precipitate is recovered from the reactor and separated from the mother liquor by any process known by the state of art, for example filtration, settling or centrifugation.

If required, some additional base can be added directly after the heating stage into the reaction medium in order to improve the yield of the reaction. The obtained precipitate can be washed or impregnated with one or several alkoxylated compounds, as more fully described below. In one embodiment, the precipitate is then dried, under air conditions for instance, at a temperature ranging from about 80 to about 300°C, preferably from about 100 to about 150°C. The drying stage is preferably performed until substantially no more weight loss is observed.

After the optional drying step, the recovered precipitate is then calcined. This allows the formation of a crystalline solid solution phase. Usually, the calcination is carried out at temperatures ranging from about 200 to about 1000°C. The calcination temperature is typically higher than about 300°C, and preferably ranges from about 400 to about 800°C.

Co-precipitation

The first stage of the co-precipitation process is the preparation of a mixture in an aqueous medium of at least a soluble cerium compound and at least a soluble zirconium compound. The mixture can be obtained either from solid compounds which are dissolved in water, or directly from aqueous solutions of these compounds, followed by mixing, in any order, of the defined solutions.

Suitable water soluble cerium compounds include cerium III salts, like nitrates or chlorides, for instance.

The soluble zirconium salts used in the invention can be, for instance, zirconium sulfate, zirconyl nitrate or zirconyl chloride.

The amount of cerium and zirconium contained in the mixture must correspond to the stoichiometric proportion required to obtain the final desired composition. Hydrogen peroxide can be added to the cerium/zirconium mixture or to the cerium or zirconium salt before mixing together. The effect of hydrogen peroxide is to oxidize at least part of Ce III to Ce IV.

Once the mixture is prepared, a base can be added to the cerium/zirconium salt solution to precipitate out the hydroxides. The base can be an ammonia solution or alkaline hydroxide solution, e.g., sodium, potassium, etc. The base solution used can, in particular, be an aqueous solution of ammonia or of sodium or potassium hydroxide. Ammonia solution is preferably used.

The precipitation is carried out on a batch or continuous basis. In the case of a continuous precipitation, the pH of the reaction is typically maintained between about 7 and about 11, preferably between about 7.5 and about 9.5. The residence time of the material in the reactor is typically at least about 15 minutes, preferably about 30 minutes. The reaction can be carried out at any suitable temperature such as room temperature. In the case of batch precipitation, the amount of base added is preferably at least the amount required to precipitate out $Ce(OH)_4$ and $Zr(OH)_4$.

After the reaction stage, a solid precipitate is recovered from the reactor and separated from the mother liquor by any process known by the state of art, for example filtration, settling or centrifugation. The obtained precipitate can then be washed or impregnated with one or several alkoxylated compounds, as described below.

The next stage of the process is calcination of the washed material, either with or without an intermediate drying step. This allows the formation of a crystalline solid solution phase. Usually, the calcination is carried out at temperatures ranging from about 200 to about 1000°C. Calcination temperatures of greater than about 300°C are suitable, preferably ranging from about 350 to about 800°C.

The alkoxylated compounds of the present invention can be defined by the general formula:

$$R_1((CH_2)_xO)_n\text{-}R_2$$

wherein $R_1$ and $R_2$ represent linear or non-linear alkyl groups or H or OH or Cl or Br or I; n is a number from 1 to 100; and x is a number from 1 to 4. $R_1$ and $R_2$ can contain an alcohol group. Of the alkyl groups, methoxy, ethoxy and propoxy groups are preferred in order to generate an improvement in the thermal stability of the $(Ce,Zr)O_2$ mixed oxides and solid solutions.

The alkoxylated compound can be of the formula:

$$R_1\text{-}((CH_2)_x\text{-}O)_n\text{-}OH,$$

wherein $R_1$ is selected from the group consisting of linear and nonlinear alkyl groups having from 1 to 20 carbons and fatty hydrocarbon residues having from 8 to 20 carbons, n is from 1 to 100, and x is from 1 to 4. Preferably, n is from 12 to 40 and x is from 1 to 3. More preferably, x is 2.

The alkoxylated compound can be of the formula:

$$H(OCH_2)_nOH \text{ or } H(OEt)_nOH,$$

wherein the average of n is from 1 to 100.

Examples of suitable alkoxylated compounds can be of the formulae:

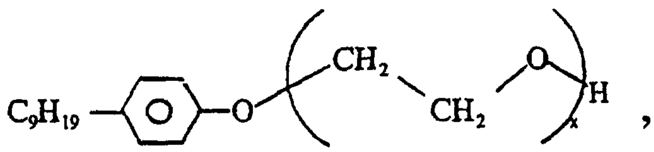

wherein the average of x is 9 or from 4 to 15;

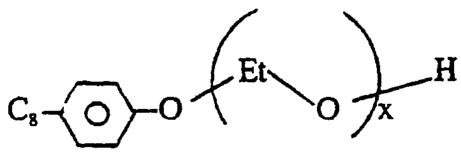

wherein the average of x is 12.5;

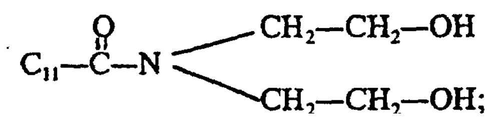

and

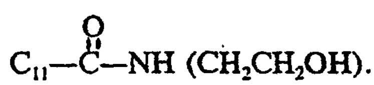

Commercially available alkoxylated compounds suitable for use are sold by Rhône-Poulenc Inc. under the tradenames: IGEPAL CO 630, IGEPAL CA 720, ALKAMIDE LE, and ALKAMIDE L203.

The alkoxylated compound can alternatively be of the formula:

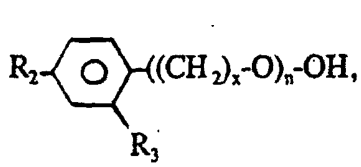

wherein $R_2$ and $R_3$ are the same or different and are independently selected from the group consisting of hydrogen and linear and nonlinear alkyl groups having from 1 to 20 carbons, n is from 1 to 100, and x is from 1 to 4. Preferably, n is from 12 to 40 and x is from 1 to 3. More preferably, x is 2.

The alkoxylated compound can further be of the formula:

$$R_4O\text{-}((CH_2)_xO)_n\text{-}H,$$

wherein $R_4$ is selected from the group consisting of linear and nonlinear alkyl groups having from 1 to 20 carbons, n is from 1 to 100, and x is from 1 to 4. Preferably, n is from 12 to 40 and x is from 1 to 3. More preferably, n is 3, and x is 2.

The alkoxylated compound can further be of the formula:

$$R_5\text{-}S\text{-}((CH_2)_xO)_n\text{-}H,$$

wherein $R_5$ is selected from the group consisting of linear and nonlinear alkyl groups having from 1 to 20 carbons, n is from 1 to 100, and x is from 1 to 4. Preferably, n is from 4 to 40 and x is from 1 to 3. More preferably, x is 2.

The alkoxylated compound can also be of the formula:

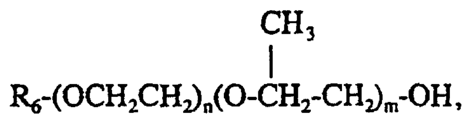

wherein $R_6$ is selected from the group consisting of linear and nonlinear alkyl groups having from 1 to 20 carbons, n is from 1 to 100, and m is from 0 to 300 preferably 0 to 100. Preferably, n is from 12 to 40 and m is from 1 to 40.

The alkoxylated compound can alternatively be of the formula:

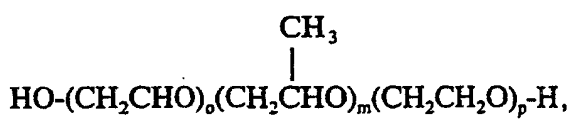

wherein o is from 0 to 300, m is from 0 to 300, and p is from 0 to 300.

The alkoxylated compound can further be of the formula:

$$R_7\text{-}(O(CH_2)_x)_n\text{-}Cl,$$

wherein $R_7$ is selected from the group consisting of linear and nonlinear alkyl groups having from 1 to 20 carbons, n is from 1 to 100, and x is from 1 to 4. Preferably, n is from 4 to 40 and x is from 1 to 3. More preferably, x is 2.

The alkoxylated compound can further be of the formula:

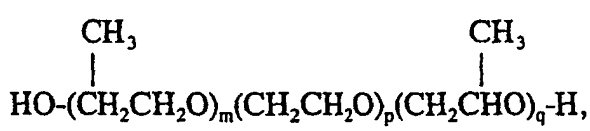

wherein m is from 0 to 300, p is from 0 to 300, and q is from 0 to 300 and having an average molecular weight of from about 40 to about 8,000.

In accordance with the present invention, the alkoxylated compound can comprise nonionic compounds. For example, the alkoxylated compound can comprise, or be derived from, compounds as listed below:

- Polyoxyalkylenated (polyethoxyethylenated, polyoxypropylenated, polyoxybutylenated) alkylphenols in which the alkyl substituent is $C_6$-$C_{12}$ and containing from 5 to 25 oxyalkylene units; examples include Tritons X-45, X-114, X-100 and X-102, marketed by Rohm & Haas Co.;
- glucosamide, glucamide, and glycerolamide;

- polyoxyalkylenated $C_6$-$C_{22}$ aliphatic alcohols containing from 1 to 25 oxyalkylene (oxyethylene, oxypropylene) units; examples include Tergitol 15-S-9 and Tergitol 24-L-6, marketed by Union Carbide Corp.; Neodol 45-9, Neodol 23-65, Neodol 45-7 and Neodol 45-4, marketed by Shell Chemical Co.; and Kyro KOB marketed by the Procter & Gamble Co.;
- the products resulting from the condensation of ethylene oxide, the compound resulting from the condensation of propylene oxide with propylene glycol, such as the Pluronics marketed by BASF;
- the products resulting from the condensation of ethylene oxide, the compound resulting from the condensation of propylene oxide with ethylenediamine, such as the Tetronics marketed by BASF;
- amine oxides such as ($C_{10}$-$C_{18}$ alkyl) dimethylamine oxides and ($C_6$-$C_{22}$ alkoxy) ethyldihydroxyethylamine oxides;
- the alkylpolyglycosides described in U.S. Patent No. 4,565,647;
- $C_6$-$C_{20}$ fatty acid amides;
- $C_6$-$C_{20}$ alkamides, preferably utilized at low concentrations;
- ethoxylated fatty acids; and
- ethoxylated amines.

The alkoxylated compound of the present invention can advantageously be provided in the form of an aqueous solution having a relatively minor amount of the alkoxylated compound. The alkoxylated compound preferably comprises less than about 50 wt. % of the aqueous solution, and more preferably comprises from about 0.1 to about 30 wt. % of the aqueous solution. A preferred commercially available compound suitable for use is sold by Rhône-Poulenc Inc. under the tradename IGEPAL 41.

The final calcined mixture produced in accordance with the present invention typically has a weight ratio of $CeO_2$ to $ZrO_2$ of from about 0:100 to about 100:0, preferably from about 95:5 to about 5:95. The resultant calcined mixture has a very high surface area, for example, greater than about 50m$^2$/g. The final calcined mixed oxides also have a very high oxygen storage capacity, for example, greater than about 3ml $O_2$/g.

The surface area of the mixed oxides produced in accordance with the present invention is designated as B.E.T. determined by nitrogen adsorption according to the standard procedure ASTM D 3663-78 established from the method by BRUNAUER - EMMET - TELLER described in Journal of the American Chemical Society, 60, 309 (1938). Thermal stability is designated as the surface area of any powdery inorganic material after aging at a given temperature for a certain time. In the current invention, 10 g of material are calcined in a muffle furnace for about 6 hours at about 900°C. After this aging stage, the surface area of the material is measured by the method previously described.

The following examples illustrate various aspects of the invention and are not intended to limit the scope thereof. In these examples, the oxygen buffer ability of mixed oxides produced by different methods are assessed by evaluating oxygen storage capacity in an oxidizing medium and oxygen release capacity in a reducing medium. The test assesses the ability of the product to be oxidized in contact with pulses of oxygen and to be reduced in contact with pulses of carbon monoxide. The carrier gas is pure helium at 10 l/h. Injections of gas are done by 16 ml volume pulses. Pulses of CO are carried out with 5% CO diluted in helium, while pulses of $O_2$ are carried out by a mixture of 2.5% $O_2$ in Helium. The gas analysis is performed by chromatography using a thermal conductivity detector. The amount of consumed oxygen leads to the oxygen storage capacity value. The specific value of oxygen storage capacity is expressed as ml of oxygen per gram of material used and is measured at about 400°C.

Example 1

Using a co-precipitation method from a nitrate solution of cerium and zirconium, a mixed oxide is prepared of the composition: 80 wt.% $CeO_2$ and 20 wt.% $ZrO_2$. The prepared nitrate solution comprises:

| | |
|---|---|
| $Ce(NO_3)_3$ 30.31% $CeO_2$ | 2309.47 g, |
| $ZrO(NO_3)_2$ 14.3% $ZrO_2$ | 699.30 g, |
| $H_2O_2$ 31.75% $H_2O_2$ | 435.75 g, and |
| Deionized Water | 5778.98 g; |

with the components being mixed well until homogenous.

The prepared ammonia solution comprises:

| | |
|---|---|
| Ammonia Solution 29.8% $NH_3$ | 947.96 g, and |
| Deionized Water | 6876.00 g; |

with the components being mixed well until homogenous.

The nitrate solution is added to the ammonia solution to precipitate out the hydroxides. The pH of the reaction is maintained between about 7 and about 11 and the temperature is room temperature. By reacting the salt mixture and adding ammonia, the mixed hydroxides, corresponding to about 30 g of dried rare earth oxides, are precipitated out from the solution and filtered on a Buchner filter. The cake is washed with about 750 ml of deionized water, then calcined at about 400□C for about 1 hour. The thermal stability of the product is evaluated after calcination in a muffle furnace at about 900°C for about 6 hours and the surface area is measured. The surface area of the aged product is about 33 $m^2$/g and the oxygen storage capacity is about 1.75 ml $O_2$/g.

Example 2

The experiment described in Example 1 is repeated, except, instead of just washing the cake with water, an additional impregnating stage is included. After water washing, the cake (about 30 g as Rare Earth oxides) is impregnated with about 40 g, of a Dowanol TBH ethoxylated butanol and then calcined at about 600°C for about 2 hours. The thermal stability of the product is evaluated after calcination in a muffle furnace at about 900°C for about 6 hours and the surface area is measured. The surface area of the aged product is about 42 $m^2$/g and the oxygen storage capacity is about 2.85 ml $O_2$/g.

Compositions of the present invention can be utilized by known techniques in the art for catalysis of exhaust gas systems and more particularly in catalytic converters for automobiles.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is to be given the full breadth of the claims appended and any and all equivalents thereof.

## Claims

**1.** A composition comprising a cerium oxide, a zirconium oxide, mixed oxides of cerium and zirconium or solid solutions of cerium oxide and zirconium oxide,
**characterized in that**
it is obtainable by a method comprising the steps of:

a) forming a mixture comprising cerium and zirconium mixed oxides, cerium oxide, zirconium oxide, cerium and zirconium oxide solid solutions or mixtures thereof;
b) washing or impregnating the mixture with at least one alkoxylated compound having greater than 2 carbon atoms; and
c) calcining the washed or impregnated mixture.

and **in that** it presents an oxygen storage capacity of greater than about 2.5 ml $O_2$/g, preferably greater than about 2.6 ml $O_2$/g.

**2.** The composition of claim 1, **characterised in that** the mixture is formed by co-thermohydrolysis or co-precipitation.

**3.** The composition of claim 1, **characterised in that** the mixed oxides have a weight ratio of $CeO_2$ to $ZrO_2$ of from about 95:5 to about 5:95.

**4.** The composition of claim 1, **characterised in that** it presents a surface area measured after calcination at about 900°C for about six hours of greater than about 50 $m^2$/g.

**5.** The composition of claim 1, **characterised in that** the alkoxylated compound is of the formula:

$$R_1\text{-}((CH_2)_x\text{-}O)_n\text{-}OH,$$

wherein $R_1$ is selected from the group consisting of linear and nonlinear alkyl groups having from 1 to 20 carbons and fatty hydrocarbon residues having from 8 to 20 carbons; n is from 1 to 100, preferably n is from 4 to 40; and x is from 1 to 4, preferably x is from 1 to 3 and more preferably x is 2.

**6.** The composition of claim 1, **characterised in that** the alkoxylated compound is of the formula:

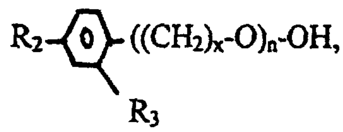

wherein $R_2$ and $R_3$ are the same or different and are independently selected from the group consisting of hydrogen and linear and nonlinear alkyl groups having from 1 to 20 carbons; n is from 1 to 100, preferably nis from 4 to 40; and x is from 1 to 4, preferably x is from 1 to 3 and more preferably x is 2.

**7.** The composition of claim 1, **characterised in that** the alkoxylated compound is of the formula:

$$R_4O\text{-}((CH_2)_xO)_n\text{-}H,$$

wherein $R_4$ is selected from the group consisting of linear and nonlinear alcohol groups having from 1 to 20 carbons, preferably $R_4$ is 2-ethylhexyl alcohol; n is from 1 to 100, preferably n is from 12 to 40 and more preferably n is 3; and x is from 1 to 4, preferably x is from 1 to 3 and more preferably x is 2.

**8.** The composition of claim 1, **characterised in that** the alkoxylated compound is of the formula:

$$R_5\text{-}S\text{-}((CH_2)_xO)_n\text{-}H,$$

wherein $R_5$ is selected from the group consisting of linear and nonlinear alkyl groups having from 1 to 20 carbons, n is from 1 to 100, preferably n is from 12 to 40; and x is from 1 to 4, preferably x is from 1 to 3 and more preferably x is 2.

**9.** The composition of claim 1, **characterised in that** the alkoxylated compound is of the formula:

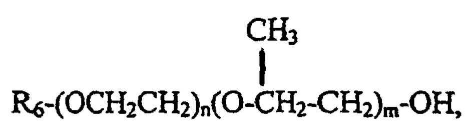

wherein $R_6$ is selected from the group consisting of linear and nonlinear alkyl groups having from 1 to 20 carbons; n is from 1 to 100, preferably n is from 12 to 40; and m is from 0 to 200, preferably m is from 0 to 100.

**10.** The composition of claim 1, **characterised in that** the alkoxylated compound is of the formula:

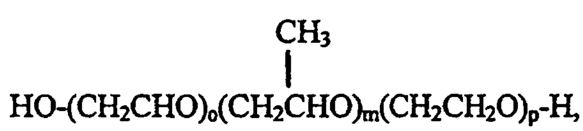

wherein o is from 0 to 300, m is from 0 to 300, and p is from 0 to 300 with the proviso that the sum o+m+p is such that the alkoxylated compound has greater than 2 carbon atoms.

**11.** The composition of claim 1, **characterised in that** the alkoxylated compound is of the formula:

$$R_7\text{-}(O(CH_2)_x)_n\text{-}Cl,$$

wherein $R_7$ is selected from the group consisting of linear and nonlinear alkyl groups having from 1 to 20 carbons; n is from 1 to 100, preferably n is from 12 to 40; and x is from 1 to 4, preferably x is from 1 to 3 and more preferably x is 2.

**12.** The composition of claim 1, **characterised in that** the alkoxylated compound is of the formula:

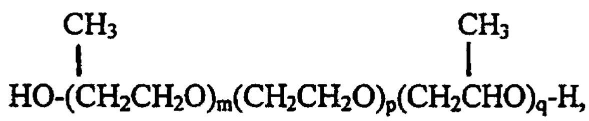

wherein m is from 0 to 300, p is from 0 to 300, and q is from 0 to 300 with the proviso that the sum m+p+q is such that the alkoxylated compound has greater than 2 carbon atoms.

**13.** A method for producing a composition comprising a cerium oxide, a zirconium oxide, mixed oxides of cerium and zirconium or solid solutions of cerium oxide and zirconium oxide,
**characterized in that** it comprises the steps of:

a) forming a mixture comprising cerium and zirconium mixed oxides, cerium oxides, zirconium oxides, cerium and zirconium solid solution or a mixture thereof;
b) washing or impregnating the mixture with at least one alkoxylated compound having greater than 2 carbon atoms; and
c) calcining the washed or impregnated mixture.

**14.** The method of claim 13, **characterised in that** the mixture is formed by co-thermohydrolysis or co-precipitation.

**15.** The method of claim 13, **characterised in that** the mixture is provided as a wet cake.

**16.** The method of claim 13, **characterised in that** it further comprises:

washing the mixture with water prior to washing or impregnating the mixture with the alkoxylated compound.

**17.** The method of claim 13, **characterised in that** the alkoxylated compound is of the formula:

$$R_1\text{-}((CH_2)_x\text{-}O)_n\text{-}OH,$$

wherein $R_1$ is selected from the group consisting of linear and nonlinear alkyl groups having from 1 to 20 carbons and fatty hydrocarbon residues having from 8 to 20 carbons; n is from 1 to 100, preferably n is from 4 to 40; and x is from 1 to 4, preferably x is from 1 to 3 and more preferably x is 2.

**18.** The method of claim 13, **characterised in that** the alkoxylated compound is of the formula:

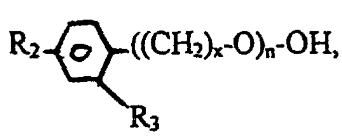

wherein $R_2$ and $R_3$ are the same or different and are independently selected from the group consisting of hydrogen and linear and nonlinear alkyl groups having from 1 to 20 carbons; n is from 1 to 100, preferably n is from 4 to 40; and x is from 1 to 4, preferably x is from 1 to 3 and more preferably x is 2.

**19.** The method of claim 13, **characterised in that** the alkoxylated compound is of the formula:

$$R_4O\text{-}((CH_2)_xO)_n\text{-}H,$$

wherein $R_4$ is selected from the group consisting of linear and nonlinear alcohol groups having from 1 to 20 carbons, preferably $R_4$ is 2-ethylhexyl alcohol; n is from 1 to 100, preferably n is 12 to 40 and more preferably n is 3; and x is from 1 to 4, preferably x is from 1 to 3 and more preferably x is 2.

**20.** The method of claim 13, **characterised in that** the alkoxylated compound is of the formula:

$$R_5\text{-S-}((CH_2)_xO)_n\text{-H},$$

wherein $R_5$ is selected from the group consisting of linear and nonlinear alkyl groups having from 1 to 20 carbons; n is from 1 to 100, preferably n is from 12 to 40; and x is from 1 to 4, preferably x is from 1 to 3 and more preferably x is 2.

**21.** The method of claim 13, **characterised in that** the alkoxylated compound is of the formula:

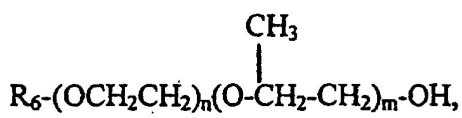

wherein $R_6$ is selected from the group consisting of linear and nonlinear alkyl groups having from 1 to 20 carbons; n is from 1 to 100, preferably n is from 12 to 40; and m is from 0 to 200, preferably m is from 0 to 100.

**22.** The method of claim 13, **characterised in that** the alkoxylated compound is of the formula:

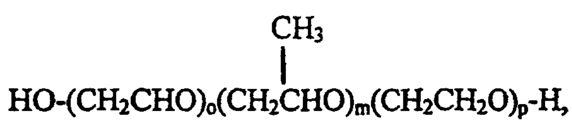

wherein o is from 0 to 300, m is from 0 to 300, and p is from 0 to 300 with the proviso that the sum o+m+p is such that the alkoxylated compound has greater than 2 carbon atoms.

**23.** The method of claim 13, **characterised in that** the alkoxylated compound is of the formula:

$$R_7\text{-}(O(CH_2)_x)_n\text{-Cl},$$

wherein $R_7$ is selected from the group consisting of linear and nonlinear alkyl groups having from 1 to 20 carbons; n is from 1 to 100, preferably n is from 12 to 40; and x is from 1 to 4, preferably x is from 1 to 3 and more preferably x is 2.

**24.** The method of claim 13, **characterised in that** the alkoxylated compound is of the formula:

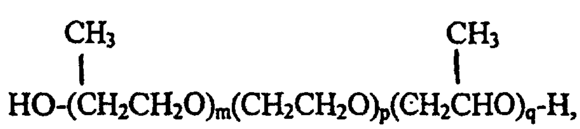

wherein m is from 0 to 300, p is from 0 to 300, and q is from 0 to 300 with the proviso that the sum m+p+q is such that the alkoxylated compound has greater than 2 carbon atoms.

**25.** The method of claim 13, **characterised in that** the alkoxylated compound is provided in an aqueous solution and the alkoxylated compound comprises less than about 50, preferably from about 10 to about 30, weight percent of

the aqueous solution.

**26.** The method of claim 13, **characterised in that** the washed mixture is calcined at a temperature of greater than about 300°C.

**27.** The method of claim 26, **characterised in that** it further comprises drying the washed mixture at a temperature of less than about 300°C prior to calcining the washed mixture at a temperature of greater than about 300°C.

**28.** A method of catalysis for exhaust gas systems comprising utilization of a composition according to any one of claims 1 to 12 or a composition made by a process according to any one of claims 13 to 27.

**29.** A catalytic converter comprising the composition according to any one of claims 1 to 12 or a composition made by a process according to any one of claims 13 to 27.

**Patentansprüche**

**1.** Eine Zusammensetzung, welche ein Ceroxid, ein Zirkoniumoxid, gemischte Oxide von Cer und Zirkonium oder feste Lösungen von Ceroxid und Zirkoniumoxid umfasst, **dadurch gekennzeichnet, dass** diese durch ein Verfahren erhältlich ist, welches die folgenden Schritte umfasst:

a) Bilden einer Mischung, welche gemischte Oxide von Cer und Zirkonium, Ceroxid, Zirkoniumoxid, feste Lösungen von Cer- und Zirkoniumoxid oder Mischungen von diesen umfasst;

b) Waschen oder Tränken der Mischung mit wenigstens einer alkoxylierten Verbindung mit mehr als 2 Kohlenstoffatomen; und

c) Calcinieren der gewaschenen oder getränkten Mischung,

und dadurch, dass diese eine Sauerstoffspeicherkapazität größer als ca. 2,5 ml $O_2$/g, vorzugsweise größer als ca. 2,6 ml $O_2$/g aufweist.

**2.** Die Zusammensetzung nach Anspruch 1, **dadurch gekennzeichnet, dass** die Mischung durch Cothermohydrolyse oder Copräzipitation gebildet wird.

**3.** Die Zusammensetzung nach Anspruch 1, **dadurch gekennzeichnet, dass** die gemischten Oxide ein Gewichtsverhältnis von $CeO_2$ zu $ZrO_2$ von ca. 95:5 bis ca. 5:95 aufweisen.

**4.** Die Zusammensetzung nach Anspruch 1, **dadurch gekennzeichnet, dass** diese einen Oberflächenbereich, gemessen nach Calcinierung bei ca. 900°C für ca. 6 Stunden, größer als ca. 50 $m^2$/g aufweist.

**5.** Die Zusammensetzung nach Anspruch 1, **dadurch gekennzeichnet, dass** die alkoxylierte Verbindung die Formel:

$$R_1\text{-}((CH_2)_x\text{-}O)_n\text{-}OH$$

aufweist, worin $R_1$ ausgewählt ist aus der Gruppe, bestehend aus linearen und nichtlinearen Alkylgruppen mit 1 bis 20 Kohlenstoffen und Fettkohlenwasserstoffresten mit 8 bis 20 Kohlenstoffen; n von 1 bis 100 beträgt, und n vorzugsweise von 4 bis 40 beträgt; und x von 1 bis 4 beträgt, und x vorzugsweise von 1 bis 3 beträgt und x noch bevorzugter 2 ist.

**6.** Die Zusammensetzung von Anspruch 1, **dadurch gekennzeichnet, dass** die alkoxylierte Verbindung die Formel:

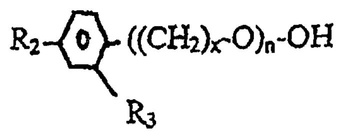

aufweist, worin $R_2$ und $R_3$ gleich oder verschieden sind und unabhängig voneinander ausgewählt sind aus der Gruppe, bestehend aus Wasserstoff und linearen und nichtlinearen Alkylgruppen mit 1 bis 20 Kohlenstoffatomen; n von 1 bis 100 beträgt, und n vorzugsweise von 4 bis 40 beträgt; und x von 1 bis 4 beträgt, und x vorzugsweise von 1 bis 3 beträgt und x noch bevorzugter 2 ist.

**7.** Die Zusammensetzung nach Anspruch 1, **dadurch gekennzeichnet, dass** die alkoxylierte Verbindung die Formel:

$$R_4O\text{-}((CH_2)_xO)_n\text{-}H$$

aufweist, worin $R_4$ ausgewählt ist aus der Gruppe, bestehend aus linearen und nichtlinearen Alkoholgruppen mit 1 bis 20 Kohlenstoffatomen, und $R_4$ vorzugsweise 2-Ethylhexylalkohol ist; n von 1 bis 100 beträgt, und n vorzugsweise von 12 bis 40 beträgt, und n noch bevorzugter 3 ist; und x von 1 bis 4 beträgt, und x vorzugsweise von 1 bis 3 beträgt und x noch bevorzugter 2 ist.

**8.** Die Zusammensetzung nach Anspruch 1, **dadurch gekennzeichnet, dass** die alkoxylierte Verbindung die Formel:

$$R_5\text{-}S\text{-}((CH_2)_xO)_n\text{-}H$$

aufweist, worin $R_5$ ausgewählt ist aus der Gruppe, bestehend aus linearen und nichtlinearen Alkylgruppen mit 1 bis 20 Kohlenstoffatomen; n von 1 bis 100 beträgt, und n vorzugsweise von 12 bis 40 beträgt; und x von 1 bis 4 beträgt, und x vorzugsweise von 1 bis 3 beträgt und x noch bevorzugter 2 ist.

**9.** Die Zusammensetzung nach Anspruch 1, **dadurch gekennzeichnet, dass** die alkoxylierte Verbindung die Formel:

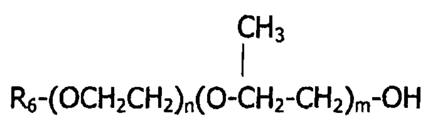

aufweist, worin $R_6$ ausgewählt ist aus der Gruppe, bestehend aus linearen und nichtlinearen Alkylgruppen mit 1 bis 20 Kohlenstoffatomen; n von 1 bis 100 beträgt, und n vorzugsweise von 12 bis 40 beträgt; und m von 0 bis 200 beträgt, und m vorzugsweise von 0 bis 100 beträgt.

**10.** Die Zusammensetzung nach Anspruch 1, **dadurch gekennzeichnet, dass** die alkoxylierte Verbindung die Formel:

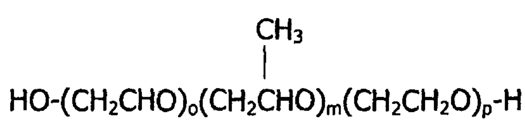

aufweist, worin o von 0 bis 300 beträgt, m von 0 bis 300 beträgt und p von 0 bis 300 beträgt, unter dem Vorbehalt, dass die Summe o + m + p derart ist, dass die alkoxylierte Verbindung mehr als 2 Kohlenstoffatome aufweist.

**11.** Die Zusammensetzung nach Anspruch 1, **dadurch gekennzeichnet, dass** die alkoxylierte Verbindung die Formel:

$$R_7\text{-}(O(CH_2)_x)_n\text{-}Cl$$

aufweist, worin $R_7$ ausgewählt ist aus der Gruppe, bestehend aus linearen und nichtlinearen Alkylgruppen mit 1 bis 20 Kohlenstoffen; n von 1 bis 100 beträgt, und n vorzugsweise von 12 bis 40 beträgt; und x von 1 bis 4 beträgt, und x vorzugsweise von 1 bis 3 beträgt und x noch bevorzugter 2 ist.

**12.** Die Zusammensetzung nach Anspruch 1, **dadurch gekennzeichnet, dass** die alkoxylierte Verbindung die Formel:

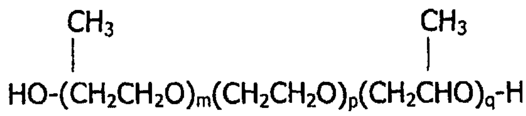

aufweist, worin m von 0 bis 300 beträgt, p von 0 bis 300 beträgt und q von 0 bis 300 beträgt, unter dem Vorbehalt, dass die Summe m + p + q derart ist, dass die alkoxylierte Verbindung mehr als 2 Kohlenstoffatome aufweist.

**13.** Ein Verfahren zur Herstellung einer Zusammensetzung, welche ein Ceroxid, ein Zirkoniumoxid, gemischte Oxide von Cer und Zirkonium oder feste Lösungen von Ceroxid und Zirkoniumoxid umfasst, **dadurch gekennzeichnet, dass** dieses die folgenden Schritte umfasst:

a) Bilden einer Mischung, welche gemischte Oxide von Cer und Zirkonium, Ceroxide, Zirkoniumoxide, eine feste Lösung von Cer und Zirkonium oder eine Mischung von diesen umfasst;

b) Waschen oder Tränken der Mischung mit wenigstens einer alkoxylierten Verbindung mit mehr als 2 Kohlenstoffatomen; und

c) Calcinieren der gewaschenen oder getränkten Mischung.

**14.** Das Verfahren nach Anspruch 13, **dadurch gekennzeichnet, dass** die Mischung durch Cothermohydrolyse oder Copräzipitation gebildet wird.

**15.** Das Verfahren nach Anspruch 13, **dadurch gekennzeichnet, dass** die Mischung als ein nasser Kuchen bereitgestellt wird.

**16.** Das Verfahren nach Anspruch 13, **dadurch gekennzeichnet, dass** dieses weiterhin umfasst:

Waschen der Mischung mit Wasser vor dem Waschen oder Tränken der Mischung mit der alkoxylierten Verbindung.

**17.** Das Verfahren nach Anspruch 13, **dadurch gekennzeichnet, dass** die alkoxylierte Verbindung die Formel:

$$R_1\text{-}((CH_2)_x\text{-}O)_n\text{-}OH$$

aufweist, worin $R_1$ ausgewählt ist aus der Gruppe, bestehend aus linearen und nichtlinearen Alkylgruppen mit 1 bis 20 Kohlenstoffen und Fettkohlenwasserstoffresten mit 8 bis 20 Kohlenstoffen; n von 1 bis 100 beträgt, und n vorzugsweise von 4 bis 40 beträgt; und x von 1 bis 4 beträgt, und x vorzugsweise von 1 bis 3 beträgt und x noch bevorzugter 2 ist.

**18.** Das Verfahren nach Anspruch 13, **dadurch gekennzeichnet, dass** die alkoxylierte Verbindung die Formel:

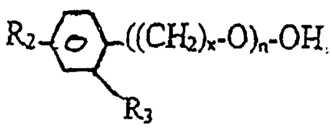

aufweist, worin $R_2$ und $R_3$ gleich oder verschieden sind und unabhängig voneinander ausgewählt sind aus der Gruppe, bestehend aus Wasserstoff und linearen und nichtlinearen Alkylgruppen mit 1 bis 20 Kohlenstoffatomen; n von 1 bis 100 beträgt, und n vorzugsweise von 4 bis 40 beträgt; und x von 1 bis 4 beträgt, und x vorzugsweise von 1 bis 3 beträgt und x noch bevorzugter 2 ist.

**19.** Das Verfahren nach Anspruch 13, **dadurch gekennzeichnet, dass** die alkoxylierte Verbindung die Formel:

$$R_4O\text{-}((CH_2)_xO)_n\text{-}H$$

aufweist, worin $R_4$ ausgewählt ist aus der Gruppe, bestehend aus linearen und nichtlinearen Alkoholgruppen mit 1 bis 20 Kohlenstoffatomen, und $R_4$ vorzugsweise 2-Ethylhexylalkohol ist; n von 1 bis 100 beträgt, und n vorzugsweise von 12 bis 40 beträgt, und n noch bevorzugter 3 ist; und x von 1 bis 4 beträgt, und x vorzugsweise von 1 bis 3 beträgt und x noch bevorzugter 2 ist.

**20.** Das Verfahren nach Anspruch 13, **dadurch gekennzeichnet, dass** die alkoxylierte Verbindung die Formel:

$$R_5\text{-}S\text{-}((CH_2)_xO)_n\text{-}H$$

aufweist, worin $R_5$ ausgewählt ist aus der Gruppe, bestehend aus linearen und nichtlinearen Alkylgruppen mit 1 bis 20 Kohlenstoffatomen; n von 1 bis 100 beträgt, und n vorzugsweise von 12 bis 40 beträgt; und x von 1 bis 4 beträgt, und x vorzugsweise von 1 bis 3 beträgt und x noch bevorzugter 2 ist.

**21.** Das Verfahren nach Anspruch 13, **dadurch gekennzeichnet, dass** die alkoxylierte Verbindung die Formel:

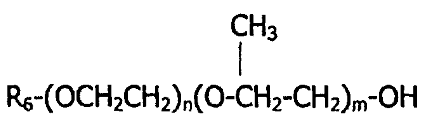

aufweist, worin $R_6$ ausgewählt ist aus der Gruppe, bestehend aus linearen und nichtlinearen Alkylgruppen mit 1 bis 20 Kohlenstoffatomen; n von 1 bis 100 beträgt, und n vorzugsweise von 12 bis 40 beträgt; und m von 0 bis 200 beträgt, und m vorzugsweise von 0 bis 100 beträgt.

**22.** Das Verfahren nach Anspruch 13, **dadurch gekennzeichnet, dass** die alkoxylierte Verbindung die Formel:

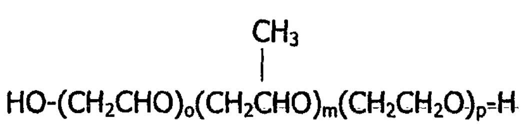

aufweist, worin o von 0 bis 300 beträgt, m von 0 bis 300 beträgt und p von 0 bis 300 beträgt, unter dem Vorbehalt, dass die Summe o + m + p derart ist, dass die alkoxylierte Verbindung mehr als 2 Kohlenstoffatome aufweist.

**23.** Das Verfahren nach Anspruch 13, **dadurch gekennzeichnet, dass** die alkoxylierte Verbindung die Formel:

$$R_7\text{-}(O(CH_2)_x)_n\text{-}Cl$$

aufweist, worin $R_7$ ausgewählt ist aus der Gruppe, bestehend aus linearen und nichtlinearen Alkylgruppen mit 1 bis 20 Kohlenstoffen; n von 1 bis 100 beträgt, und n vorzugsweise von 12 bis 40 beträgt; und x von 1 bis 4 beträgt, und x vorzugsweise von 1 bis 3 beträgt und x noch bevorzugter 2 ist.

**24.** Das Verfahren nach Anspruch 13, **dadurch gekennzeichnet, dass** die alkoxylierte Verbindung die Formel:

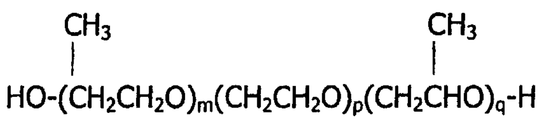

aufweist, worin m von 0 bis 300 beträgt, p von 0 bis 300 beträgt und q von 0 bis 300 beträgt, unter dem Vorbehalt, dass die Summe m + p + q derart ist, dass die alkoxylierte Verbindung mehr als 2 Kohlenstoffatome aufweist.

**25.** Das Verfahren nach Anspruch 13, **dadurch gekennzeichnet, dass** die alkoxylierte Verbindung in einer wässrigen Lösung bereitgestellt wird und die alkoxylierte Verbindung weniger als ca. 50, vorzugsweise von ca. 10 bis ca. 30 Gew.-% der wässrigen Lösung umfasst.

**26.** Das Verfahren nach Anspruch 13, **dadurch gekennzeichnet, dass** die gewaschene Mischung bei einer Temperatur von mehr als ca. 300°C calciniert wird.

**27.** Das Verfahren nach Anspruch 26, **dadurch gekennzeichnet, dass** es weiterhin das Trocknen der gewaschenen Mischung bei einer Temperatur von weniger als ca. 300°C vor dem Calcinieren der gewaschenen Mischung bei einer Temperatur von mehr als ca. 300°C umfasst.

**28.** Ein Verfahren der Katalyse für Abgassysteme, welches die Verwendung einer Zusammensetzung gemäß irgendeinem der Ansprüche 1 bis 12 oder einer Zusammensetzung, die durch ein Verfahren gemäß irgendeinem der Ansprüche 13 bis 27 erzeugt wurde, umfasst.

**29.** Ein Katalysator, welcher die Zusammensetzung gemäß irgendeinem der Ansprüche 1 bis 12 oder eine Zusammensetzung, welche durch ein Verfahren gemäß irgendeinem der Ansprüche 13 bis 27 erzeugt wurde, umfasst.

## Revendications

**1.** Composition comprenant un oxyde de cérium, un oxyde de zirconium, des oxydes mixtes de cérium et de zirconium ou des solutions solides d'oxyde de cérium et d'oxyde de zirconium,
**caractérisée en ce que**
on peut l'obtenir par un procédé comprenant les étapes de :

a) formation d'un mélange comprenant les oxydes mixtes de cérium et de zirconium, l'oxyde de cérium, l'oxyde de zirconium, les solutions solides d'oxyde de cérium et d'oxyde de zirconium ou les mélanges de ceux-ci ;
b) lavage ou imprégnation du mélange avec au moins un composé alcoxylé ayant plus de 2 atomes de carbone ;
et
c) calcination du mélange lavé ou imprégné.

et **en ce qu'**il présente une capacité de stockage de l'oxygène supérieure à environ 2,5 ml $O_2$/g, de préférence supérieure à environ 2,6 ml $O_2$/g.

**2.** Composition selon la revendication 1, **caractérisée en ce que** le mélange est formé par co-thermohydrolyse ou co-précipitation.

**3.** Composition selon la revendication 1, **caractérisée en ce que** les oxydes mixtes ont un rapport de poids de $CeO_2$ à $ZrO_2$ d'environ 95:5 à environ 5:95.

**4.** Composition selon la revendication 1, **caractérisée en ce qu'**elle présente une surface mesurée après calcination à environ 900°C pendant environ six heures supérieure à environ 50 $m^2/g$.

**5.** Composition selon la revendication 1, **caractérisée en ce que** le composé alcoxylé est de formule :

$$R_1\text{-}((CH_2)_x\text{-}O)_n\text{-}OH,$$

dans laquelle $R_1$ est choisi dans le groupe constitué par les groupes alkyle linéaires et non linéaires ayant de 1 à 20 atomes de carbone et les résidus d'hydrocarbures gras ayant de 8 à 20 atomes de carbone ; n vaut de 1 à 100, de préférence n vaut de 4 à 40 ; et x vaut de 1 à 4, de préférence x vaut de 1 à 3, et davantage de préférence x vaut 2.

**6.** Composition selon la revendication 1, **caractérisée en ce que** le composé alcoxylé est de formule :

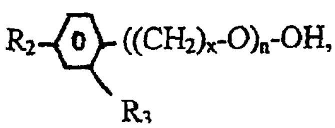

dans laquelle $R_2$ et $R_3$ sont identiques ou différents et sont choisis indépendamment dans le groupe constitué par un atome d'hydrogène et les groupes alkyle linéaires et non linéaires ayant de 1 à 20 atomes de carbone ; n vaut de 1 à 100, de préférence n vaut de 4 à 40 ; et x vaut de 1 à 4, de préférence x vaut de 1 à 3, et davantage de préférence x vaut 2.

**7.** Composition selon la revendication 1, **caractérisée en ce que** le composé alcoxylé est de formule :

$$R_4O\text{-}((CH_2)_xO)_n\text{-}H,$$

dans laquelle $R_4$ est choisi dans le groupe constitué par les groupes alcool linéaires et non linéaires ayant de 1 à 20 atomes de carbone, de préférence $R_4$ est l'alcool 2-éthylhexylique ; n vaut de 1 à 100, de préférence n vaut de 12 à 40, et davantage de préférence n vaut 3 ; et x vaut de 1 à 4, de préférence x vaut de 1 à 3, et davantage de préférence x vaut 2.

**8.** Composition selon la revendication 1, **caractérisée en ce que** le composé alcoxylé est de formule :

$$R_5\text{-}S\text{-}((CH_2)_xO)_n\text{-}H,$$

dans laquelle $R_5$ est choisi dans le groupe constitué par les groupes alkyle linéaires et non linéaires ayant de 1 à 20 atomes de carbone, n vaut de 1 à 100, de préférence n vaut de 12 à 40 ; et x vaut de 1 à 4, de préférence x vaut de 1 à 3, et davantage de préférence x vaut 2.

**9.** Composition selon la revendication 1, **caractérisée en ce que** le composé alcoxylé est de formule :

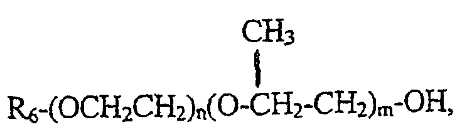

dans laquelle $R_6$ est choisi dans le groupe constitué par les groupes alkyle linéaires et non linéaires ayant de 1 à 20 atomes de carbone, n vaut de 1 à 100, de préférence n vaut de 12 à 40 ; et m vaut de 0 à 200, de préférence

m vaut de 0 à 100.

**10.** Composition selon la revendication 1, **caractérisée en ce que** le composé alcoxylé est de formule :

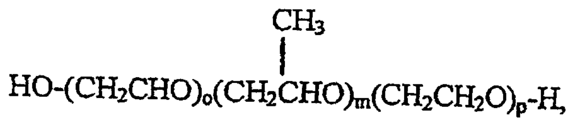

dans laquelle o vaut de 0 à 300, m vaut de 0 à 300, et p vaut de 0 à 300, à la condition que la somme o + m + p soit telle que le composé alcoxylé ait plus de 2 atomes de carbone.

**11.** Composition selon la revendication 1, **caractérisée en ce que** le composé alcoxylé est de formule :

$$R_7\text{-}(O(CH_2)_x)_n\text{-}Cl,$$

dans laquelle $R_7$ est choisi dans le groupe constitué par les groupes alkyle linéaires et non linéaires ayant de 1 à 20 atomes de carbone, n vaut de 1 à 100, de préférence n vaut de 12 à 40 ; et x vaut de 1 à 4, de préférence x vaut de 1 à 3, et davantage de préférence x vaut 2.

**12.** Composition selon la revendication 1, **caractérisée en ce que** le composé alcoxylé est de formule :

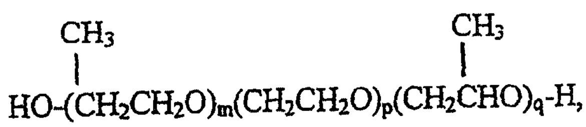

dans laquelle m vaut de 0 à 300, p vaut de 0 à 300, et q vaut de 0 à 300, à la condition que la somme m + p + q soit telle que le composé alcoxylé a plus de 2 atomes de carbone.

**13.** Procédé de préparation d'une composition comprenant un oxyde de cérium, un oxyde de zirconium, des oxydes mixtes de cérium et de zirconium ou des solutions solides d'oxyde de cérium et d'oxyde de zirconium, **caractérisé en ce qu'**il comprend les étapes de :

a) formation d'un mélange comprenant des oxydes mixtes de cérium et de zirconium, des oxydes de cérium, des oxydes de zirconium, des solutions solides de cérium et d'oxyde de zirconium ou un mélange de ceux-ci ;
b) lavage ou imprégnation du mélange avec au moins un composé alcoxylé ayant plus de 2 atomes de carbone ;
et
c) calcination du mélange lavé ou imprégné.

**14.** Procédé selon la revendication 13, **caractérisé en ce que** le mélange est formé par co-thermohydrolyse ou co-précipitation.

**15.** Procédé selon la revendication 13, **caractérisé en ce que** le mélange est fourni sous la forme d'un pain humide.

**16.** Procédé selon la revendication 13, **caractérisé en ce qu'**il comprend en outre :

le lavage du mélange avec de l'eau avant le lavage ou l'imprégnation du mélange avec le composé alcoxylé.

**17.** Procédé selon la revendication 13, **caractérisé en ce que** le composé alcoxylé est de formule :

$$R_1\text{-}((CH_2)_x\text{-}O)_n\text{-}OH,$$

dans laquelle $R_1$ est choisi dans le groupe constitué par les groupes alkyle linéaires et non linéaires ayant de 1 à 20 atomes de carbone et les résidus d'hydrocarbures gras ayant de 8 à 20 atomes de carbone ; n vaut de 1 à 100, de préférence n vaut de 4 à 40 ; et x vaut de 1 à 4, de préférence x vaut de 1 à 3, et davantage de préférence x vaut 2.

**18.** Procédé selon la revendication 13, **caractérisé en ce que** le composé alcoxylé est de formule :

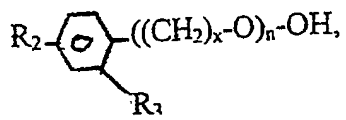

dans laquelle $R_2$ et $R_3$ sont identiques ou différents et sont choisis indépendamment dans le groupe constitué par un atome d'hydrogène et les groupes alkyle linéaires et non linéaires ayant de 1 à 20 atomes de carbone ; n vaut de 1 à 100, de préférence n vaut de 4 à 40 ; et x vaut de 1 à 4, de préférence x vaut de 1 à 3, et davantage de préférence x vaut 2.

**19.** Procédé selon la revendication 13, **caractérisé en ce que** le composé alcoxylé est de formule :

$$R_4O\text{-}((CH_2)_xO)_n\text{-}H,$$

dans laquelle $R_4$ est choisi dans le groupe constitué par les groupes alcool linéaires et non linéaires ayant de 1 à 20 atomes de carbone, de préférence $R_4$ est l'alcool 2-éthylhexylique ; n vaut de 1 à 100, de préférence n vaut de 12 à 40, et davantage de préférence n vaut 3 ; et x vaut de 1 à 4, de préférence x vaut de 1 à 3, et davantage de préférence x vaut 2.

**20.** Procédé selon la revendication 13, **caractérisé en ce que** le composé alcoxylé est de formule :

$$R_5\text{-}S\text{-}((CH_2)_xO)_n\text{-}H,$$

dans laquelle $R_5$ est choisi dans le groupe constitué par les groupes alkyle linéaires et non linéaires ayant de 1 à 20 atomes de carbone, n vaut de 1 à 100, de préférence n vaut de 12 à 40 ; et x vaut de 1 à 4, de préférence x vaut de 1 à 3, et davantage de préférence x vaut 2.

**21.** Procédé selon la revendication 13, **caractérisé en ce que** le composé alcoxylé est de formule :

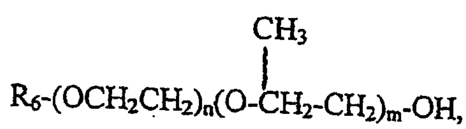

dans laquelle $R_6$ est choisi dans le groupe constitué par les groupes alkyle linéaires et non linéaires ayant de 1 à 20 atomes de carbone, n vaut de 1 à 100, de préférence n vaut de 12 à 40 ; et m vaut de 0 à 200, de préférence m vaut de 0 à 100.

**22.** Procédé selon la revendication 13, **caractérisé en ce que** le composé alcoxylé est de formule :

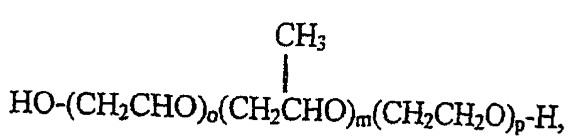

dans laquelle o vaut de 0 à 300, m vaut de 0 à 300, et p vaut de 0 à 300, à la condition que la somme o + m + p

soit telle que le composé alcoxylé a plus de 2 atomes de carbone.

**23.** Procédé selon la revendication 13, **caractérisé en ce que** le composé alcoxylé est de formule :

$$R_7\text{-}(O(CH_2)_x)_n\text{-}Cl,$$

dans laquelle $R_7$ est choisi dans le groupe constitué par les groupes alkyle linéaires et non linéaires ayant de 1 à 20 atomes de carbone, n vaut de 1 à 100, de préférence n vaut de 12 à 40 ; et x vaut de 1 à 4, de préférence x vaut de 1 à 3, et davantage de préférence x vaut 2.

**24.** Procédé selon la revendication 13, **caractérisé en ce que** le composé alcoxylé est de formule :

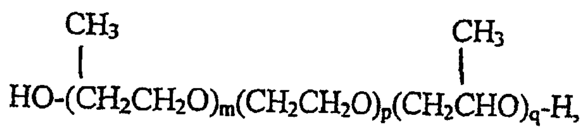

dans laquelle m vaut de 0 à 300, p vaut de 0 à 300, et qui vaut de 0 à 300, à la condition que la somme m + p + q soit telle que le composé alcoxylé ait plus de 2 atomes de carbone.

**25.** Procédé selon la revendication 13, **caractérisé en ce que** le composé alcoxylé est fourni en solution aqueuse, et le composé alcoxylé comprend moins d'environ 50, de préférence d'environ 10 à environ 30 pour cent en poids de la solution aqueuse.

**26.** Procédé selon la revendication 13, **caractérisé en ce que** le mélange lavé est calciné à une température supérieure à environ 300°C.

**27.** Procédé selon la revendication 26, **caractérisé en ce qu'**il comprend en outre le séchage du mélange lavé à une température inférieure à environ 300°C avant de calciner le mélange lavé à une température supérieure à environ 300°C.

**28.** Procédé de catalyse pour les systèmes de gaz d'échappement comprenant l'utilisation d'une composition selon l'une quelconque des revendications 1 à 12 ou une composition préparée par un procédé selon l'une quelconque des revendications 13 à 27.

**29.** Convertisseur catalytique comprenant la composition selon l'une quelconque des revendications 1 à 12 ou une composition préparée par un procédé selon l'une quelconque des revendications 13 à 27.